# EUROPÄISCHE PATENTSCHRIFT

(11) **EP 2 377 786 B1**
(45) Veröffentlichungstag und Bekanntmachung des Hinweises auf die Patenterteilung: **27.06.2012**
(21) Anmeldenummer: 10159878.7
(22) Anmeldetag: 14.04.2010
(51) Int. Cl.: B65G 23/28, B65G 23/36, B27D 5/00

(54) **Vorrichtung zum Transportieren von Werkstücken**
Device for transporting workpieces
Dispositif destiné au transport de pièces usinées

(43) Veröffentlichungstag der Anmeldung: 19.10.2011
(73) Patentinhaber: Homag Holzbearbeitungssysteme AG, 72296 Schopfloch (DE)
(72) Erfinder: Rathgeber, Peter, 72280, Dornstetten (DE)
(74) Vertreter: HOFFMANN EITLE

(56) Entgegenhaltungen:
- DE-A1- 10 051 758
- DE-A1- 19 726 206

## Beschreibung

### Technisches Gebiet

Die vorliegende Erfindung bezieht sich auf eine Vorrichtung zum Transportieren von Werkstücken für eine Bearbeitungsmaschine zum Bearbeiten von plattenförmigen oder dreidimensional geformten Werkstücken, die bevorzugt zumindest Abschnittsweise aus Holz, aus Kunststoff oder dergleichen bestehen.

Für den Werkstücktransport in Durchlaufmaschinen, wie z. B. Doppelendprofilern oder Kantenanleimmaschinen kommen üblicherweise Endlosumlaufelemente zum Einsatz. Neben Riemen, z. B. Zahnriemen kommen hauptsächlich Transportketten zum Einsatz. Auf diesen Ketten sind häufig Mitnehmer in Form von Nocken bzw. Kettenplatten vorgesehen, um die Werkstücke an den Transportketten in Position zu halten und durch die Maschine zu fördern. Dabei wird in der Regel die Längsbearbeitung ohne und die Querbearbeitung mit Mitnehmern in Form von Nocken durchgeführt. Ferner werden mehrere, z.B. zwei im Wesentlichen parallel zueinander verlaufende Transportketten vorgesehen. Um die Werkstücke während der Bearbeitung auf den Kettenplatten zu halten kommen Oberdrucksysteme, wie z. B. umlaufende Riemen zum Einsatz, die die Werkstücke während des Durchlaufs auf die Ketten drücken.

Da bei derartigen Maschinen heute sehr große Transportstrecken realisiert werden, ergibt sich eine große Länge der Transportketten. Die Transportketten weisen jedoch nur eine begrenzte Steifigkeit auf. Ferner kann verschleißbedingt auch ein Spiel in den Gelenken der einzelnen Kettenglieder auftreten. Durch die begrenzte Steifigkeit und das Spiel in den Kettengliedern erfolgt der Transport der Werkstücke teilweise relativ ungenau.

Aus dieser Ungenauigkeit der Werkstückförderung ergeben sich Fertigungsungenauigkeiten bei der Bearbeitung der Werkstücke.
Diese Ungenauigkeiten nehmen mit zunehmender Transportstrecke, d.h. auch zunehmender Transportkettenlänge zu.

Ein weiteres Problem ergibt sich daraus, dass die Werkstücke durch das Oberdrucksystem fest an die Transportketten angedrückt werden, so dass ein Kraftschluss zwischen den Ketten und Werkstücken vorliegt. Die Ketten sind somit über die Werkstücke kinematisch miteinander gekoppelt. Weisen die Transportketten nun eine unterschiedliche Längung auf, führt dies zu einer Verspannung der Ketten. Die Zugbelastung der stärker gelängten Kette wird dabei erhöht, da diese durch die Längung eine erhöhte Umlaufgeschwindigkeit erhält, während die Zugbelastung der weniger gelängten Kette abnimmt, da diese quasi von der anderen Kette mitgeschoben wird. Dies kann sogar dazu führen, dass das Antriebskettenrad der weniger gelängten Transportkette, welches die Zugkraft in die Transportkette einleitet, völlig entlastet wird, wenn die Transportkette über die Werkstücke über einen bestimmten Betrag angeschoben wird. Dies hat mehrere Nachteile zur Folge. Zum Einen ergibt sich eine stärkere Belastung der stärker gelängten anschiebenden Transportkette und zum Anderen liegt an der weniger belasteten Kette keine definierte Belastungssituation an. Die weniger belastete Kette kann dadurch sogar aus dem Antriebskettenrad herausspringen.

### Stand der Technik

Der Hauptantrieb der beiden Endlosumlaufelemente, insbesondere Transportketten wird heute hauptsächlich durch einen Antrieb ausgeführt, wobei die beiden Antriebs- bzw. Kettenräder durch eine Welle verbunden sind. Diese Lösung wird zunehmend durch separate Antriebe für jedes Endlosumlaufelement bzw. für jede Transportkette abgelöst. In diesem Fall sind die Antriebe dann in der Regel elektronisch gekoppelt.

Aus der Druckschrift DE 197 26 206 A1 ist eine Vorrichtung gemäß dem Oberbegriff des Anspruchs 1 mit zwei Endlosumlaufelementen bekannt, welche von zwei unabhängig von einander steuerbaren Hauptantrieben antreibbar sind.

Aus der DE 100 51 758 A1 ist eine Positioniervorrichtung und ein damit durchführbares Arbeitsverfahren bekannt, mit denen über einen langen Verfahrweg eine schnelle Positionierung mit sehr hoher Positioniergenauigkeit ohne Endpositionierschwingungen durchgeführt werden kann. Das Zugmittel des Transportwagens besteht dabei aus mindestens einem Zahnriemen und die Positioniervorrichtung weist zwei separat ansteuerbare und mit Reglern versehene Antriebsmotoren auf, wobei der zum ersten Zahnriemen parallele zweite Zahnriemen mit separaten Antriebsrädern versehen ist.

### Darstellung der Erfindung

Es ist daher Aufgabe der vorliegenden Erfindung eine Vorrichtung zum Transportieren von Werkstücken der oben genannten Art bereitzustellen, die es ermöglicht, dass Endlosumlaufelemente, insbesondere Transportketten so miteinander synchronisiert werden, dass eine unterschiedliche Längung und eine unterschiedliche Belastung der Endlosumlaufelemente ausgeglichen werden kann. Insbesondere ist es Aufgabe der vorliegenden Erfindung, ein Mitschieben eines der Endlosumlaufelemente über die Werkstücke durch das andere Endlosumlaufelement und damit eine Entlastung der Zugkrafteinbringung in eines der Endlosumlaufelemente durch ein Mitschieben über die Werkstücke durch das andere Endlosumlaufelement zu verhindern bzw. zu verringern. Ferner ist es Aufgabe der vorliegenden Erfindung, es zu ermöglichen, dass an beiden Endlosumlaufelementantrieben immer ein durch das Endlosumlaufelement bedingtes Lastmoment anliegt.

Erfindungsgemäß wird diese Aufgabe durch eine Vorrichtung zum Transportieren von Werkstücken nach Anspruch 1 und ein Verfahren zum Betreiben einer solchen Vorrichtung nach Anspruch 6 gelöst. Vorteilhafte Ausführungsformer der vorliegenden Erfindung sind in den Unteransprüchen angegeben.

Eine erfindungsgemäße Vorrichtung zum Transportieren von Werkstücken für eine Bearbeitungsmaschine zum Bearbeiten von plattenförmigen oder dreidimensional geformten Werkstücken, die bevorzugt zumindest abschnittsweise aus Holz, Holzwerkstoffen, Kunststoff oder dergleichen bestehen, weist wenigstens ein erstes und ein zweites jeweils als geschlossener Rin.g verlaufendes Endlosumlaufelement zum Transportieren der Werkstücke auf, die im gleichen Drehsinn angetrieben sind und wenigstens abschnittsweise im Wesentlichen parallel zueinander verlaufen. Die Endlosumlaufelemente sind besonders bevorzugt als Transportketten und bevorzugt als Transportbänder ausgebildet. Transportbänder ermöglichen dabei einen besonders geräuscharmen Betrieb und sind wartungsarm. Transportketten bieten eine höhere Steifigkeit und ermöglichen dadurch einen genaueren Werkstücktransport, insbesondere bei schweren Werkstücken oder langen Transportstrecken.

Ferner weist eine erfindungsgemäße Vorrichtung zum Transportieren von Werkstücken wenigstens einen ersten Hauptantrieb, der das erste Endlosumlaufelement und das zweite Endlosumlaufelement antreibt, oder wenigstens einen ersten Hauptantrieb, der das erste Endlosumlaufelement antreibt und wenigstens einen unabhängig vom ersten Hauptantrieb steuerbaren zweiten Hauptantrieb, der das zweite Endlosumlaufelement antreibt, auf. Treibt der erste Hauptantrieb beide Endlosumlaufelemente an, kann die Vorrichtung dahingehend einfach ausgeführt werden, dass auf den zweiten Hauptantrieb verzichtet werden kann. Die Ausgestaltung mit einem ersten Hauptantrieb und einem zweiten Hauptantrieb ermöglicht eine additive Leistungseinbringung durch die beiden Hauptantriebe und ferner die Möglichkeit beide Endlosumlaufelemente in ihrer Bewegung individuell über die beiden unabhängigen Hauptantriebe zu regeln.

Ferner weist eine erfindungsgemäße Vorrichtung zum Transportieren von Werkstücken wenigstens einen ersten Nebenantrieb, der das erste Endlosumlaufelement antreibt oder abbremst, und wenigstens einen unabhängig vom ersten Nebenantrieb steuerbaren zweiten Nebenantrieb auf, der das zweite Endlosumlaufelement antreibt oder abbremst. Mittels der Nebenantriebe ist es möglich, die Endlosumlaufelemente in ihrem Umlauf auch bei unterschiedlicher Belastung beider Endlosumlaufelemente in ihrer Umlaufgeschwindigkeit zu synchronisieren. Insbesondere kann beispielsweise durch einen abbremsenden Nebenantrieb ein Mitschieben eines Endlosumlaufelementes durch das andere Endlosumlaufelement vermieden werden, wenn die Endlosumlaufelemente durch den Reibschluss von sich über beide Endlosumlaufelemente erstreckende Werkstücke in ihrer Bewegung gekoppelt sind. Dadurch kann das in der Praxis verbreitet auftretende Problem behoben werden, dass ein Endlosumlaufelement durch das andere mitgeschoben wird, was zu verstärktem Verschleiß durch wechselnde und nicht vorgesehene Belastungssituationen an den Endlosumlaufelementen und den Hautpantrieben führt und auch manchmal dazu führt, dass die Endlosumlaufelemente aus dem Eingriff von den Hauptantrieben zugeordneten Antriebsrädern geraten. Durch die vorliegende Erfindung kann somit das Transportverhalten der Endlosumlaufelemente stärker synchronisiert und ferner können Verschleiß- und Reparaturkosten durch die homogenere Belastung beider Endlosumlaufelemente gesenkt werden. Ferner können Ausfallzeiten durch das Herausspringen der Endlosumlaufelemente aus ihren Antriebsrädern oder ein Überspringen vermieden werden.

Gemäß einer bevorzugten Ausführungsform der vorliegenden Erfindung sind dass erste Endlosumlaufelement und das zweite Endlosumlaufelement über eine gemeinsame Antriebswelle gekoppelt. Durch diese Maßnahme können beide Endlosumlaufelemente mittels eines gemeinsamen Hauptantriebs angetrieben werden, was den Aufbau vereinfacht und die Kosten der Anlage senkt. Ferner wird die Anlage dadurch einfacher steuerbar, da auf diese Weise sichergestellt ist, dass beide Endlosumlaufelemente mit der gleichen Geschwindigkeit angetrieben werden. Bei der Steuerung der Nebenantriebe muss daher lediglich ein Hauptantrieb einbezogen werden.

Gemäß einer bevorzugten Ausführungsform der vorliegenden Erfindung sind an den Endlosumlaufelementen Mitnehmer zum formschlüssigen und/oder kraftschlüssigen Mitnehmen der Werkstücke angeordnet. Die Positionierung der Werkstücke auf den Endlosumlaufelementen wird mittels der Mitnehmer und/oder über Reibschluss erreicht und stabilisiert. Die Mitnehmer verhindern ein Verrutschen der Werkstücke auf den Endlosumlaufelementen, insbesondere beim Bearbeiten der Werkstücke während des Transports. Die Mitnehmer sind dabei bevorzugt dazu eingerichtet, mit den Werkstücken in formschlüssigen Eingriff oder in kraftschlüssigen Eingriff gebracht zu werden. Die Mitnehmer für einen formschlüssigen Eingriff weisen bevorzugt Klauen oder Absätze auf, an denen sich die Werkstücke abstützen können, um nicht zu verrutschen. Die kraftschlüssigen Mitnehmer klemmen die Werkstücke bevorzugt. Ein System aus Mitnehmern, das auf Kraftschluss basiert, weist beispielsweise ein Oberdrucksystem zum vertikalen Andrücken der Werkstücke an die Endlosumlaufelemente auf, um deren Verrutschen bevorzugt durch Reibschluss zu verhindern.

Bei einem erfindungsgemäßes Verfahren zum Betreiben einer erfindungsgemäßen Vorrichtung wird wenigstens ein Betriebsparameter, insbesondere ein Drehmoment und/oder eine Winkelstellung und/oder eine Stromaufnahme der Hauptantriebe und/oder ein Betriebsparameter, insbesondere ein Drehmoment und/oder eine Winkelstellung und/oder eine Stromaufnahme der Nebenantriebe erfasst und an eine Steuerung weitergegeben. Durch das Erfassen des Betriebsparameters und dessen Eingabe in die Steuerung wird es möglich, die Steuerung der Vorrichtung zustandsabhängig durchzuführen. Beispielsweise kann durch das steuerungstechnische Berücksichtigen von einem Drehmoment an einem der Hauptantrieb ein Blockieren des zugeordneten Endlosumlaufelementes erkannt werden, und entsprechend ein Notprogramm gestartet werden, das eine Beschädigung der Vorrichtung oder der Werkstücke durch ein Absenken des Antriebsmomentes der Hauptantriebe ermöglicht. Ferner ermöglicht die Verarbeitung des Parameters in der Steuerung eine angepasste Steuerung besonders bevorzugt der Nebenantriebe oder der Hauptantriebe, um belastungsabhängigen Gleichlaufschwankungen der Endlosumlaufelemente entgegenzuwirken. Solche Gleichlaufschwankungen drücken sich in den gemessenen Betriebsparametern aus und lassen sich mittels der Nebenantriebe kompensieren. Die steuerungstechnische Erfassung des Anlagenzustands mittels der Betriebsparameter ist hierfür nützlich.

Gemäß einer bevorzugten Ausführungsform der vorliegenden Erfindung werden Betriebsparameter, z.B. Drehmomente, Winkelstellungen, Stromaufnahmen der Hauptantriebe oder auch Drehmomente, Winkelstellungen, Stromaufnahmen der Nebenantriebe protokolliert. Die protokollierten Betriebsparameter lassen sich dann auswerten, um Veränderungen im Maschinenverhalten frühzeitig zu erkennen und durch vorbeugende Maßnahmen einem erhöhten Verschleiß oder einem Ausfall der Maschine bzw. einer schlechteren Bauteilqualität auf Grund eines ungenauen Transports vorzubeugen. Ferner können auch im Nachhinein Anlagenfehler mittels der aufzeichneten Betriebsparameter analysiert werden, um diese in Zukunft durch entsprechende Maßnahmen zu verhindern.

Erfindungsgemäß können die Drehmomente der Hauptantriebe und die Drehmomente der Nebenantriebe paarweise jeweils so gesteuert werden, dass sie gegeneinander gerichtet sind. Ein vorauslaufendes Endlosumlaufelement kann somit durch den ihm zugeordneten Nebenantrieb abgebremst werden. Dadurch ist es möglich, auch bei ungleicher Belastung beider Endlosumlaufelemente z.B. durch unterschiedlich einwirkende resultierende Bearbeitungskräfte oder ein Mitschieben eines der Endlosumlaufelemente durch die Werkstücke, einen synchronen Umlauf der Endlosumlaufelemente zu erzielen. Gemäß einer besonderen Ausführungsform des erfindungsgemäßen Verfahrens wird bei einem Überschreiten eines Drehmoments über einen Grenzwert und/oder einer Stromaufnahme über einen Grenzwert an einem der Hauptantriebe ein Notprogramm gestartet und/oder eine Meldung ausgegeben. Mittels dieser Maßnahme können Beschädigungen an den Werkstücken oder der Anlage durch unsynchronen Umlauf der Endlosumlaufelemente verhindert werden. Bevorzugt werden hierfür von der Steuerung ein Drehmomentzeitverhalten des Drehmoments, ein Drehzahlzeitverhaltens einer Drehzahl oder ein Stromaufnahmezeitverhalten der Stromaufnahme eines der Hauptantriebe von der Steuerung ausgewertet.

Die der Erfindung zu Grunde liegende Aufgabe wird demnach dadurch gelöst, dass beide Endlosumlaufelementstränge durch die paarweise Anordnung von Haupt- und Nebenantrieb und deren gegeneinander gerichtete Einbringung von Drehmomenten in das jeweilige Endlosumlaufelement eine höhere Steifigkeit und Winkelsynchronität der Endlosumlaufelemente herstellen. Dadurch wird für Bearbeitungsmaschinen mit großen Werkstücktransportlängen ein sehr genauer Werkstücktransport und eine höhere Bearbeitungsgenauigkeit möglich.

Durch die erfindungsgemäße Vorrichtung zum Transportieren von Werkstücken und das erfindungsgemäße Verfahren zum Betreiben einer solchen Vorrichtung ist es möglich, einen exakteren Werkstücktransport bzw. Vorschub und damit eine höhere Bearbeitungsgenauigkeit am Werkstück zu realisieren. Durch die an die Belastungssituation der Endlosumlaufelemente angepasste Steuerung der Nebenantriebe kann eine gegenseitige Verspannung der Endlosumlaufelementstränge vermieden werden, was deren Lebensdauer erhöht. Ferner lassen sich die Belastungssituationen der beiden Hauptantriebe und der beiden Nebenantriebe protokollieren und überwachen, was eine Diagnose des Maschinenzustands und angepasste Wartung der Maschine ermöglicht. So können schon präventiv ungünstige Belastungssituationen der Maschine erkannt und behoben werden, wodurch die Lebensdauer der Komponenten erhöht und die Kosten gesenkt werden können. Durch die permanente Überwachung des Betriebszustandes der Endlosumlaufelemente können präventiv Servicemaßnahmen geplant und durchgeführt werden, wodurch ungünstige Betriebszustände vermieden werden können. Durch die definiert einstellbare Belastungssituation der Endlosumlaufelemente lässt sich deren Vorschub über die gesamte Transportstrecke genauer einstellen, was eine höhere Bearbeitungsgenauigkeit ermöglicht. Ferner kann durch die Vermeidung von ungünstigen Betriebszuständen an den Antrieben ein geringerer Verschleiß realisiert werden. Sind Korrekturmaßnahmen hinsichtlich der Werkstückausrichtung in der Förderrichtung notwendig, so können diese besonders schnell über die Steuerung umgesetzt werden, ohne das mechanische Umrüstarbeiten erforderlich sind. Dadurch können die Stillstandsseiten der Maschine erheblich reduziert werden. Da sich die Belastungssituation der Endlosumlaufelemente mit der vorliegenden Erfindung genau einstellen lässt, treten geringere Belastungen an den Endlosumlaufelementen auf. Daher können die Endlosumlaufelemente geringer belastbar ausgelegt werden, was auch in diesem Bereich Kosten spart. Durch die erfindungsgemäße Überwachung der Endlosumlaufelemente können kritische Situationen sofort erfasst und durch Auslösen eines Notprogramms die Maschine vor größerem Schaden bewahrt werden. Veränderungen an der Bearbeitungsmaschine, die z. B. durch Alterung und Verschleiß bedingt sind und eine größere Schwergängigkeit der Endlosumlaufelemente bedingen, lassen sich durch das Erfassen der Betriebsparameter sofort erkennen, wodurch es möglich wird, Maßnahmen einzuleiten, die einen erhöhten Verschleiß an der Maschine bzw. Beschädigungen an der Maschine verhindern. Ferner ermöglicht es die vorliegende Erfindung, die Bearbeitungsqualität der Werkstücke mit dem Maschinenzustand in Bezug zu setzen und damit eine genaue Fertigungsplanung durchzuführen.

### Kurze Beschreibung der Zeichnungen

Die Erfindung wird im Folgenden anhand von
Ausführungsbeispielen unter Bezugnahme auf die beiliegenden Figuren der Zeichnung näher erläutert.

Von den Figuren zeigen:
- Fig. 1: eine schematische Darstellung einer erfindungsgemäße Vorrichtung zum Transportieren von Werkstücken gemäß einer ersten Ausführungsform; und
- Fig. 2: eine schematische Darstellung einer erfindungsgemäße Vorrichtung zum Transportieren von Werkstücken gemäß einer zweiten Ausführungsform;
- Fig. 3: die steuerungstechnische Verarbeitung von Betriebsparametern gemäß einem Ausführungsbeispiel eines erfindungsgemäßen Verfahrens.

In den Figuren bezeichnen dieselben Bezugszeichen gleiche oder funktionsgleiche Komponenten, soweit nichts Gegenteiliges angegeben ist.

### Ausführliche Beschreibung der bevorzugten Ausführungsformen

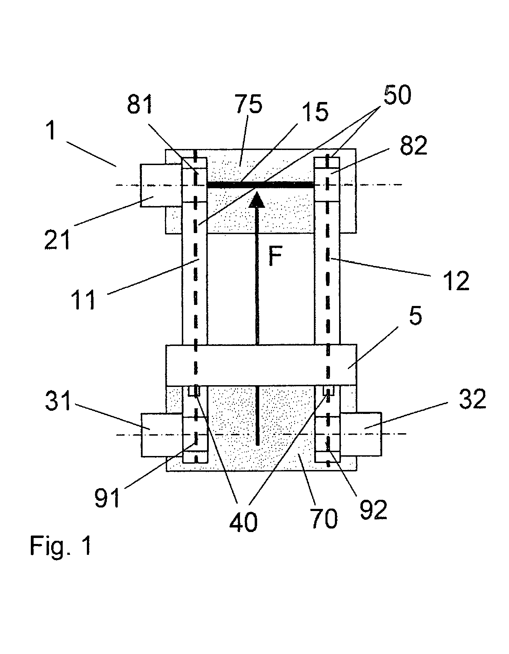

Fig. 1 zeig eine schematische Darstellung einer erfindungsgemäßen Vorrichtung 1 zum Transportieren von Werkstücken 5 gemäß einer ersten Ausführungsform.

Ein erstes und ein zweites jeweils als geschlossener Ring verlaufendes Endlosumlaufelement 11, 12 zum Transportieren der Werkstücke 5 verlaufen im Wesentlichen parallel zueinander. Die Endlosumlaufelemente 11, 12 sind im gleichen Drehsinn angetrieben und bilden eine Förderstrecke, deren Richtung mit F angegeben ist. Dem ersten Endlosumlaufelement 11 ist ein erster Hauptantrieb 21 zum Antreiben des Endlosumlaufelementes 11 zugeordnet. Das zweite Endlosumlaufelement 12 wird durch den ersten Hauptantrieb 21 über eine gemeinsame Antriebswelle 15 mit angetrieben. Ferner ist dem ersten Endlosumlaufelement 11 ist ein erster Nebenantrieb 31 zugeordnet und dem zweiten Endlosumlaufelement 12 ist ein zweiter Nebenantrieb 32 zum Antreiben der Endlosumlaufelemente 11, 12 zugeordnet. Die Antriebe 21, 22, 31, 32 befinden sich über zugeordnete Antriebsräder 81, 82, 91, 92 zur Kraft- bzw. Drehmomentübertragung mit den Endlosumlaufelementen 11, 12 im Eingriff. Ferner weisen die Endlosumlaufelemente 11, 12 bei diesem Ausführungsbeispiel Mitnehmer 40 auf, die durch einen Eingriff in zu transportierende Werkstücke 5 deren positionsgenauen Transport auf den sich im Wesentlichen parallele zueinander bewegenden Endlosumlaufelementen 11, 12 ermöglichen. Die Endlosumlaufelemente 11, 12 bilden so die Transportstrecke F, die den Transport von Werkstücken 5 von einem Werkstückeinlaufbereich 70 in einen Werkstückauslaufbereich 75 ermöglichen. Ferner sind noch Oberdrucksysteme 50 zum vertikalen Andrücken der Werkstücke 5 an die Endlosumlaufelemente 11, 12 vorgesehen, die durch gestrichelte Linien angegeben sind.

Der erste Nebenantrieb 31, der das erste Endlosumlaufelement 11 antreibt oder abbremst, und der zweite Nebenantrieb 32 sind unabhängig voneinander steuerbar. Dadurch können mit den Nebenantrieben 31, 32 die Belastungssituationen der Endlosumlaufelemente 11, 12 individuell eingestellt werden. Wird beispielsweise das zweite Endlosumlaufelement 12 durch das erste Endlosumlaufelement 11 durch sich kraftschlüssig über beide Endlosumlaufelemente 11, 12 sich erstreckende Werkstücke 5 mitgeschoben, liegt im Bereich des zweiten Antriebsrades 82 ein geringes Antriebsmoment an. Die Antriebskräfte können dadurch wechseln, was zu Verschleiß führt und unter Umständen auch ein Herausspringen des zweiten Endlosumlaufelementes 12 aus dem Eingriff mit dem zweiten Antriebsrad 82 bedingt. Durch entsprechendes Beaufschlagen des zweiten Nabenantriebes 32 mit einem geeignet großen negativen, d.h. bremsenden Drehmoment wird diesem Mitschieben entgegengewirkt und der Gleichlauf beider Endlosumlaufelemente 11, 12 wieder hergestellt. Dadurch wird der Verschleiß gesenkt. Ferner werden Stillstände, die durch das Herausspringen eines der Endlosumlaufelemente 11, 12 aus dem Eingriff mit dem jeweiligen Antriebsrad 81, 82 entstehen vermieden.

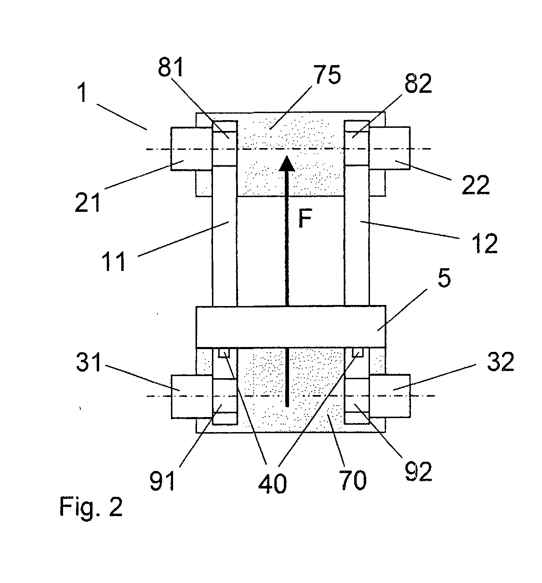

Fig. 2 eine schematische Darstellung einer erfindungsgemäße Vorrichtung 1 zum Transportieren von Werkstücken 5 gemäß einer zweiten Ausführungsform. Dieses Ausführungsbeispiel unterscheidet sich lediglich in Details vom ersten Ausführungsbeispiel. Daher wird auf die dort gemachten Ausführungen verwiesen und hier werden lediglich die Unterschiede ausgeführt. Bei diesem Ausführungsbeispiel ist für jedes der beiden Endlosumlaufelemente 11, 12 jeweils ein separater Hauptantrieb 21, 22 vorgesehen. Die Gemeinsame Antriebswelle 15 aus dem ersten Ausführungsbeispiel entfällt daher. Der zweite Hauptantrieb 22 steht über ein entsprechendes Antriebsrad 82 mit dem zweiten Endlosumlaufelement 12 im Eingriff.

Die zwei unabhängig voneinander steuerbaren Hauptantriebe 21, 22 ermöglichen es, je nach Belastungszustand, ein spezifisches Antriebsmoment in jedes der Endlosumlaufelemente 11, 12 einzubringen. Dadurch kann der Gleichlauf beider Endlosumlaufelement 11, 12 erhöht werden. Das einzubringende Antriebsmoment kann somit an die spezifische Prozesssituation angepasst werden.

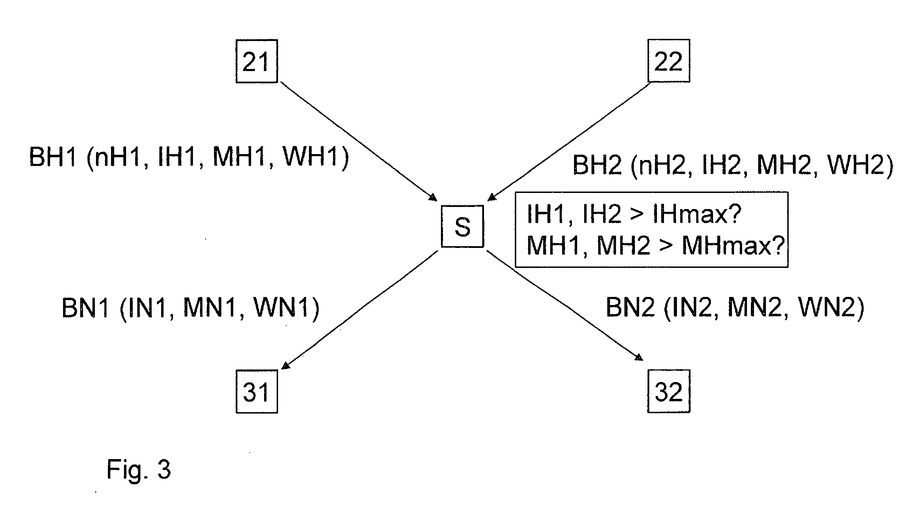

Fig. 3 zeigt die steuerungstechnische Verarbeitung von Betriebsparametern gemäß einem Ausführungsbeispiel eines erfindungsgemäßen Verfahrens. Ein Betriebsparameter BH1 aus der Gruppe bestehend aus einer Drehzahl am ersten Hauptantrieb NH1, einer Stromaufnahme am ersten Hauptantrieb IH1, einem Drehmoment am ersten Hauptantrieb MH1 und einer Winkelstellung am ersten Hauptantrieb WH1 werden erfasst und an die Steuerung S weitergegeben. Entsprechend werden Betriebsparameter BH2 aus der Gruppe bestehend aus einer Drehzahl am zweiten Hauptantrieb NH2, einer Stromaufnahme am zweiten Hauptantrieb IH2, einem Drehmoment am zweiten Hauptantrieb MH2 und einer Winkelstellung am zweiten Hauptantrieb WH2 erfasst und an die Steuerung S weitergegeben. Hier werden die Betriebsparameter BH1, BH2 der Hauptantriebe 21, 22 ausgewertet. Beispielsweise werden die gemessenen Stromaufnahmen IH1, IH2 der Hauptantriebe 21, 22 mit einem zulässigen Maximalwert IHmax verglichen. Analog können die gemessenen Drehmomente MH1, MH2 der Hauptantriebe 21, 22 mit einem zulässigen Maximalwert MHmax verglichen werden. Basierend auf dieser Zustandsauswertung werden dann entsprechende Sollgrößen, beispielsweise die Stromaufnahme IN1, IN2, das Antriebsdrehmoment MN1, MN2 oder eine gewünschte Winkelstellung WN1, WN2 bzw, deren Zeitverhalten für die Betriebsparameter BN1 bzw. BN2 der Nebenantriebe 31, 32 generiert. Das erfindungsgemäße Verfahren erlaubt es, die erfindungsgemäße Vorrichtung so zu steuern, dass die oben beschriebenen ungewollten Zustände an den Endlosumlaufelementen 21, 22 von der Steuerung erkannt und durch entsprechende Betriebsparameter BN1, BN2 der Nebenantriebe kompensiert werden. Dadurch kann eine Vorrichtung zum Transportieren von Werkstücken zur Verfügung gestellt werden, die in ihrem Verschleiß optimiert ist und geringere Stillstandszeiten aufweist.

Obwohl die vorliegende Erfindung anhand bevorzugter Ausführungsbeispiele vorliegend beschrieben wurde, ist sie darauf nicht beschränkt, sondern auf vielfältige Weise modifizierbar.

### Bezugszeichenliste

- 1: Vorrichtung zum Transportieren von Werkstücken
- 5: Werkstück
- 11: erstes Endlosumlaufelement
- 12: zweites Endlosumlaufelement
- 15: Antriebswelle
- 21: erster Hauptantrieb
- 22: zweiter Hauptantrieb
- 31: erster Nebenantrieb
- 32: zweiter Nebenantrieb
- 40: Mitnehmer
- 50: Oberdrucksystem
- 70: Werkstückeinlaufbereich
- 75: Werkstückauslaufbereich
- 81: Antriebsrad des ersten Hauptantriebs
- 82: Antriebsrad des zweiten Hauptantriebs
- 91: Antriebsrad des ersten Nebenantriebs
- 92: Antriebsrad des zweiten Nebenantriebs
- BH1: Betriebsparameter am ersten Hauptantrieb
- BH2: Betriebsparameter am zweiten Hauptantrieb
- BN1: Betriebsparameter am ersten Nebenantrieb
- BN2: Betriebsparameter am zweiten Nebenantrieb
- nH1: Drehzahl erster Hauptantrieb
- nH2: Drehzahl zweiter Hauptantrieb
- F: Förderstrecke
- IH1: Stromaufnahme am ersten Hauptantrieb
- IH2: Strohmaufnahme am zweiten Hauptantrieb
- IHmax: Stromgrenzwert Hauptantrieb
- IN1: Stromaufnahme am ersten Nebenantrieb
- IN2: Strohmaufnahme am zweiten Nebenantrieb
- MH1: Drehmoment am ersten Hauptantrieb
- MH2: Drehmoment am zweiten Hauptantrieb
- MHmax: Drehmomentgrenzwert Hauptantrieb
- MN1: Drehmoment am ersten Nebenantrieb
- MN2: Drehmoment am zweiten Nebenantrieb
- S: Steuerung
- WH1: Wickelstellung am ersten Hauptantrieb
- WH2: Winkelstellung am zweiten Hauptantrieb
- WN1: Winkelstellung am ersten Nebenantrieb
- WN2: Winkelstellung am zweiten Nebenantrieb

## Patentansprüche

1. Vorrichtung (1) zum Transportieren von Werkstücken für eine Bearbeitungsmaschine zum Bearbeiten von plattenförmigen oder dreidimensional geformten Werkstücken, die bevorzugt zumindest abschnittsweise aus Holz, Holzwerkstoffen, Kunststoff oder dergleichen bestehen mit:
wenigstens einem ersten und einem zweiten jeweils als geschlossener Ring verlaufenden Endlosumlaufelement (11, 12) zum Transportieren der Werkstücke (5), die im gleichen Drehsinn angetrieben sind und wenigstens abschnittsweise im Wesentlichen parallel zueinander verlaufen; und
wenigstens einem ersten Hauptantrieb (21), der das erste Endlosumlaufelement (11) und das zweite Endlosumlaufelement (12) antreibt, oder einem ersten Hauptantrieb (21), der das erste Endlosumlaufelement (11) antreibt und wenigstens einem unabhängig vom ersten Hauptantrieb (21) steuerbaren zweiten Hauptantrieb (22), der das zweite Endlosumlaufelement (12) antreibt, **dadurch gekennzeichnet, dass** die Vorrichtung
wenigstens einen ersten Nebenantrieb (31), der das erste Endlosumlaufelement (11) antreibt oder abbremst, und wenigstens einen unabhängig vom ersten Nebenantrieb (31) steuerbaren zweiten Nebenantrieb (32), der das zweite Endlosumlaufelement (12) antreibt oder abbremst, um einen Gleichlauf der Endlosumlaufelemente (11, 12) zu erreichen, aufweist.

2. Vorrichtung nach Anspruch 1,
**dadurch gekennzeichnet,**
**dass** erste Endlosumlaufelement (11) und das zweite Endlosumlaufelement (12) über eine gemeinsame Antriebswelle (15) gekoppelt sind.

3. Vorrichtung nach Anspruch 1 oder 2,
**dadurch gekennzeichnet,**
**dass** an den Endlosumlaufelementen (11, 12) Mitnehmer (40) zum formschlüssigen und/oder kraftschlüssigen Mitnehmen der Werkstücke (5) angeordnet sind.

4. Vorrichtung nach einem der vorhergehenden Ansprüche,
**dadurch gekennzeichnet,**
**dass** ein Oberdrucksystem (50) zum vertikalen Andrücken der Werkstücke (5) an die Endlosumlaufelemente (11, 12) vorgesehen ist.

5. Vorrichtung nach einem der vorhergehenden Ansprüche,
**dadurch gekennzeichnet,**
**dass** die Endlosumlaufelemente (11, 12) eine Förderstrecke (F) für die Werkstücke bilden, die von einem Werkstückeinlaufbereich (70), der dazu vorgesehen ist, die Werkstücke aufzunehmen zu einem Werkstückauslaufbereich (75), der den Endbereich der Transportstrecke (F) bildet, verläuft und den Hauptantrieben (21, 22) und den Nebenantrieben (31, 32) Endlosumlaufelementantriebsräder (81, 82, 91, 92) zur Kraftübertragung auf das jeweilige Endlosumlaufelement (11, 12) zugeordnet sind, wobei die Endlosumlaufelementantriebsräder (81, 82) der Hauptantriebe (21, 22) in einem Werkstückauslaufbereich (75) und die Endlosumlaufelementantriebsräder (91, 92) der Nebenantriebe (31, 32) in einem Werkstückeinlaufbereich (70) angeordnet sind.

6. Verfahren zum Betreiben eine Vorrichtung nach einem der Ansprüche 1 bis 5,
**dadurch gekennzeichnet,**
**dass** wenigstens ein Betriebsparameter (BH), insbesondere ein Drehmoment (MH1, MH2) und/oder eine Winkelstellung (WH1, WH2) und/oder eine Stromaufnahme (IH1, IH2) der Hauptantriebe (21, 22) und/oder ein Betriebsparameter (NH), insbesondere ein Drehmoment (MN1, MN2) und/oder eine Winkelstellung (WN1, WN2) und/oder eine Stromaufnahme (IN1, IN2) der Nebenantriebe (31, 32) erfasst und an eine Steuerung (S) weitergegeben werden.

7. Verfahren nach Anspruch 6,
**dadurch gekennzeichnet,**
**dass** die Drehmomente (MH1, MH2) und/oder Winkelstellungen (WH1, WH2) und/oder Stromaufnahmen (IH1, IH2) der Hauptantriebe (21, 22) und/oder Drehmomente (MN1, MN2) und/oder Winkelstellungen (WN1, WN2) und/oder Stromaufnahmen (IN1, IN2) der Nebenantriebe (31, 32) protokolliert werden.

8. Verfahren nach Anspruch 6 oder 7,
**dadurch gekennzeichnet,**
**dass** die Drehmomente (MH1, MH2) der Hauptantriebe (21, 22) und die Drehmomente (MN1, MN2) der Nebenantriebe (31, 32) paarweise jeweils so gesteuert werden, dass sie gegeneinander gerichtet sind.

9. Verfahren nach einem der Ansprüche 6 bis 8,
**dadurch gekennzeichnet,**
**dass** die Drehmomente (MH1, MH2) der Hauptantriebe (21, 22) und die Drehmomente (MN1, MN2) der Nebenantriebe (31, 32) paarweise jeweils so gesteuert werden, dass beide Endlosumlaufelemente (11, 12) auch bei ungleicher Belastung synchron zueinander umlaufen.

10. Verfahren nach einem der Ansprüche 6 bis 9,
**dadurch gekennzeichnet,**
**dass** bei einem Überschreiten eines Drehmoments (MH1, MH2) über einen Grenzwert (MHmax) und/oder einer Stromaufnahme über einem Grenzwert (IHmax) an einem der Hauptantriebe (21, 22) ein Notprogramm gestartet und/oder eine Meldung ausgegeben wird.

11. Verfahren nach einem der Ansprüche 6 bis 10,
**dadurch gekennzeichnet,**
**dass** bei einem festgelegten Drehmomentzeitverhalten des Drehmoments (MH1, MH2) und/oder Drehzahlzeitverhaltens einer Drehzahl (DH1, DH2) oder Stromaufnahmezeitverhalten der Stromaufnahme (IH1, IHS) eines der Hauptantriebe (21, 22) ein Notprogramm gestartet oder eine Meldung ausgegeben wird.

12. Verfahren nach einem der Ansprüche 6 bis 11,
**dadurch gekennzeichnet,**
**dass** die Drehmomente (MN1, MN2) der Nebenantriebe (31, 32) so gesteuert werden, dass ein von einer Endlosumlaufelement (11, 12) über wenigstens ein an beiden Endlosumlaufelementen (11, 12) befestigtes Werkstück (5) auf das jeweils andere Endlosumlaufelement (11, 12) übertragene Mitnahmekraft (FM) von dem der jeweils anderen Endlosumlaufelement (11, 12) zugeordneten zweiten Nebenantrieb (31, 32) durch ein entsprechendes negatives Drehmoment (MN1, MN2) kompensiert wird.

## Claims

1. Apparatus (1) for transporting workpieces for a processing machine for processing board-like or three-dimensionally shaped workpieces which are preferably in at least one section made of timber, derived timber products, plastic or the like, having:
at least one first and one second endlessly rotating element (11, 12) each running as a closed loop for transporting the workpieces (5), which are driven in the same direction of rotation and in at least one section run substantially parallel to each other; and
at least one first main drive (21) which drives the first endlessly rotating element (11) and the second endlessly rotating element (12), or having a first main drive (21) which drives the first endlessly rotating element (11) and at least one second main drive (22) which is controllable independently of the first main drive (21) and which drives the second endlessly rotating element (12),
**characterised in that** the apparatus
has at least one first auxiliary drive (31) which drives or brakes the first endlessly rotating element (11), and at least one second auxiliary drive (32) which is controllable independently of the first auxiliary drive (31) and which drives or brakes the second endlessly rotating element (12), in order to achieve synchronisation of the endlessly rotating elements (11, 12).

2. Apparatus according to claim 1,
**characterised in that**
the first endlessly rotating element (11) and the second endlessly rotating element (12) are coupled via a common drive shaft (15).

3. Apparatus according to claim 1 or 2,
**characterised in that**
on the endlessly rotating elements (11, 12) are disposed catches (40) for form-locking and/or force-locking entrainment of the workpieces (5).

4. Apparatus according to any of the preceding claims,
**characterised in that**
an upper pressure system (50) for vertically pressing the workpieces (5) against the endlessly rotating elements (11, 12) is provided.

5. Apparatus according to any of the preceding claims,
**characterised in that**
the endlessly rotating elements (11, 12) form a conveying zone (F) for the workpieces, which runs from a workpiece inlet region (70) which is provided for receiving the workpieces, to a workpiece outlet region (75) which forms the end region of the transport zone (F), and drive wheels (81, 82, 91, 92) for the endlessly rotating elements for the transmission of force to the respective endlessly rotating element (11, 12) are associated with the main drives (21, 22) and the auxiliary drives (31, 32), wherein the drive wheels (81, 82) of the main drives (21, 22) for the endlessly rotating elements are disposed in a workpiece outlet region (75), and the drive wheels (91, 92) of the auxiliary drives (31, 32) for the endlessly rotating elements are disposed in a workpiece inlet region (70).

6. Method for operating an apparatus according to any of claims 1 to 5,
**characterised in that**
at least one operating parameter (BH), in particular a torque (MH1, MH2) and/or an angular position (WH1, WH2) and/or a current consumption (IH1, IH2), of the main drives (21, 22) and/or an operating parameter (NH), in particular a torque (MN1, MN2) and/or an angular position (WN1, WN2) and/or a current consumption (IN1, IN2), of the auxiliary drives (31, 32) are detected and forwarded to a control system (S).

7. Method according to claim 6,
**characterised in that**
the torques (MH1, MH2) and/or angular positions (WH1, WH2) and/or current consumptions (IH1, IH2) of the main drives (21, 22) and/or torques (MN1, MN2) and/or angular positions (WN1, WN2) and/or current consumptions (IN1, IN2) of the auxiliary drives (31, 32) are recorded.

8. Method according to claim 6 or 7,
**characterised in that**
the torques (MH1, MH2) of the main drives (21, 22) and the torques (MN1, MN2) of the auxiliary drives (31, 32) are in each case controlled in pairs in such a way that they are in opposite directions.

9. Method according to any of claims 6 to 8,
**characterised in that**
the torques (MH1, MH2) of the main drives (21, 22) and the torques (MN1, MN2) of the auxiliary drives (31, 32) are in each case controlled in pairs in such a way that the two endlessly rotating elements (11, 12) rotate in synchronisation with each other even when the load is unequal.

10. Method according to any of claims 6 to 9,
**characterised in that**
if a torque (MH1, MH2) exceeds a limit value (MHmax) and/or a current consumption exceeds a limit value (IHmax) on one of the main drives (21, 22) an emergency program is started and/or a message is issued.

11. Method according to any of claims 6 to 10,
**characterised in that**,
with a fixed torque-time behaviour of the torque (MH1, MH2) and/or speed-time behaviour of a speed (DH1, DH2) or current consumption-time behaviour of the current consumption (IH1, IHS) of one of the main drives (21, 22), an emergency program is started or a message is issued.

12. Method according to any of claims 6 to 11,
**characterised in that**
the torques (MN1, MN2) of the auxiliary drives (31, 32) are controlled in such a way that an entraining force (FM) transmitted from one endlessly rotating element (11, 12) to the other endlessly rotating element (11, 12) via at least one workpiece (5) attached to both endlessly rotating elements (11, 12), is compensated by the second auxiliary drive (31, 32) associated with the other endlessly rotating element (11, 12), by a corresponding negative torque (MN1, MN2).

## Revendications

1. Dispositif (1) servant au transport de pièces d'usinage pour une machine d'usinage servant à usiner des pièces d'usinage en forme de plaques ou formées de façon tridimensionnelle, pièces d'usinage qui sont, de préférence, au moins partiellement en bois, en matériaux dérivés du bois, en matière plastique ou bien constituées de matières semblables, et se composent :
d'au moins un premier et d'un deuxième élément circulaire sans fin (11, 12) s'étendant respectivement comme un anneau fermé et servant au transport des pièces d'usinage (5) qui sont entraînées dans le même sens de rotation et
s'étendent au moins partiellement en étant sensiblement parallèles entre elles ; et
d'au moins un premier entraînement principal (21) qui entraîne le premier élément circulaire sans fin (11) et le deuxième élément circulaire sans fin (12), ou
bien d'un premier entraînement principal (21) qui entraîne le premier élément circulaire sans fin (11),
et d'au moins un deuxième entraînement principal (22) pouvant être commandé indépendamment du premier entraînement principal (21), deuxième entraînement principal qui entraîne le deuxième élément circulaire sans fin (12),
**caractérisé en ce que** le dispositif présente au moins un premier entraînement secondaire (31) qui entraîne ou freine le premier élément circulaire sans fin (11), et au moins un deuxième entraînement secondaire (32) pouvant être commandé indépendamment du premier entraînement secondaire (31), deuxième entraînement secondaire qui entraîne ou freine le deuxième élément circulaire sans fin (12), pour obtenir une course synchrone des éléments circulaires sans fin (11, 12).

2. Dispositif selon la revendication 1, **caractérisé en ce que** le premier élément circulaire sans fin (11) et le deuxième élément circulaire sans fin (12) sont couplés par un arbre d'entraînement commun (15).

3. Dispositif selon la revendication 1 ou 2, **caractérisé en ce que** des éléments d'entraînement (40) servant à l'entraînement des pièces d'usinage (5), par complémentarité de forme et/ou par action de force, sont disposés sur les éléments circulaires sans fin (11, 12).

4. Dispositif selon l'une quelconque des revendications précédentes, **caractérisé en ce qu'**il est prévu un système à haute pression (50) servant à appuyer verticalement les pièces d'usinage (5) sur les éléments circulaires sans fin (11, 12).

5. Dispositif selon l'une quelconque des revendications précédentes, **caractérisé en ce que** les éléments circulaires sans fin (11, 12) forment une trajectoire de transport (F) pour les pièces d'usinage, trajectoire de transport qui s'étend depuis une zone d'arrivée des pièces d'usinage (70) qui est prévue pour recevoir les pièces d'usinage, jusqu'à une zone de sortie des pièces d'usinage (75) qui forme la zone d'extrémité de la trajectoire de transport (F), et des roues d'entraînement (81, 82, 91, 92) des éléments circulaires sans fin, servant à la transmission de force à l'élément circulaire sans fin respectif (11, 12), sont associées aux entraînements principaux (21, 22) et aux entraînements secondaires (31, 32), où les roues d'entraînement (81, 82) des éléments circulaires sans fin, associées aux entraînements principaux (21, 22), sont disposées dans une zone de sortie des pièces d'usinage (75), les roues d'entraînement (91, 92) des éléments circulaires sans fin, associées aux entraînements secondaires (31, 32), étant disposées dans une zone d'arrivée des pièces d'usinage (70).

6. Procédé de fonctionnement d'un dispositif selon l'une quelconque des revendications 1 à 5, **caractérisé en ce qu'**au moins un paramètre de fonctionnement (BH), en particulier un couple (MH1, MH2) et/ou une position angulaire (WH1, WH2) et/ou une consommation de courant (IH1, IH2) des entraînements principaux (21, 22), et/ou un paramètre de fonctionnement (NH), en particulier un couple (MN1, MN2) et/ou une position angulaire (WN1, WN2) et/ou une consommation de courant (IN1, IN2) des entraînements secondaires (31, 32), sont saisis et transmis à une commande (S).

7. Procédé selon la revendication 6, **caractérisé en ce que** les couples (MH1, MH2) et/ou les positions angulaires (WH1, WH2) et/ou les consommations de courant (IH1, IH2) des entraînements principaux (21, 22) et/ou les couples (MN1, MN2) et/ou les positions angulaires (WN1, WN2) et/ou les consommations de courant (IN1, IN2) des entraînements secondaires (31, 32) sont enregistrés.

8. Procédé selon la revendication 6 ou 7, **caractérisé en ce que** les couples (MH1, MH2) des entraînements principaux (21, 22) et les couples (MN1, MN2) des entraînements secondaires (31, 32) sont régulés à chaque fois par paire, de manière telle qu'ils soient dirigés en sens opposé les uns par rapport aux autres.

9. Procédé selon l'une quelconque des revendications 6 à 8, **caractérisé en ce que** les couples (MH1, MH2) des entraînements principaux (21, 22) et les couples
(MN1, MN2) des entraînements secondaires (31, 32) sont régulés à chaque fois par paire, de manière telle que les deux éléments circulaires sans fin (11, 12) tournent de façon synchrone l'un par rapport à l'autre, même en cas de charge différente.

10. Procédé selon l'une quelconque des revendications 6 à 9, **caractérisé en ce qu'**un programme de secours est lancé et/ou un message est délivré dans le cas d'un dépassement d'un couple (MH1, MH2) au-delà d'une valeur limite (MHmax) et/ou dans le cas d'une consommation de courant de l'un des entraînements principaux (21, 22) au-delà d'une valeur limite (IHmax).

11. Procédé selon l'une quelconque des revendications 6 à 10, **caractérisé en ce qu'**un programme de secours est lancé ou un message est délivré dans le cas d'un comportement dans le temps déterminé et concernant le couple (MH1, MH2) et/ou dans le cas d'un comportement dans le temps concernant une vitesse de rotation (DH1, DH2) ou dans le cas d'un comportement dans le temps concernant la consommation de courant (IH1, IHS) de l'un des entraînements principaux (21, 22).

12. Procédé selon l'une quelconque des revendications 6 à 11, **caractérisé en ce que** les couples (MN1, MN2) des entraînements secondaires (31, 32) sont régulés de manière telle, qu'une force d'entraînement (FM) transmise par au moins une pièce d'usinage (5) fixée sur les deux éléments circulaires sans fin (11, 12) et passant à chaque fois d'un élément circulaire sans fin (11, 12) à l'autre élément circulaire sans fin (11, 12) soit compensée par un couple négatif correspondant (MN1, MN2) fourni par le deuxième entraînement secondaire (31, 32) associé à chaque fois à l'autre élément circulaire sans fin (11, 12).
